# EUROPEAN PATENT APPLICATION

(11) **EP 2 373 005 A1**
(43) Date of publication of application: **05.10.2011**
(21) Application number: 10154987.1
(22) Date of filing: 01.03.2010
(51) Int. Cl.: H04N 5/445

(54) **Method for notifying a user about a broadcast event**

(71) Applicant: Nagravision S.A., 1033 Cheseaux-sur-Lausanne (CH)
(72) Inventor: Fullton, Laura, 1006 Lausanne (CH); Buffard, Christophe, 1006 Lausanne (CH)
(74) Representative: Leman Consulting S.A.

(57) **Abstract**

The present invention concerns a method for notifying a user about a broadcast event, this method comprising the steps of :
- entering into a management center (MC) at least one user keyword (KW);
- communicating identification means (UA) of at least one user unit to the management center said at least one user unit being linked to the user;
- in the management center, determining a set of broadcast data linked to broadcast events;
- forming a query (Q) containing at least a subset of the set of broadcast data and at least one user keyword;
- sending said query to a plurality of data sources (DS);
- in said plurality of data sources, searching at least one response (R) to the query based on a link between the user keyword and the subset of broadcast data;
- sending said response (R) to the management center;
- transmitting a notification (N) containing said response, to at least one of said at least one user unit using the identification means (UA);
- receiving the notification (N) by said at least one user unit;
- notifying the user of the match between the user keyword (KW) and a present or future broadcast event.

## Description

### TECHNICAL FIELD

The present invention concerns a method for notifying a user about a broadcast event. More specifically, this method enables a user to define data or information the user is interested in. When an event to be broadcast is related to a subject of interest for this user, he/she is notified.

### BACKGROUND ART

In the field of pay-TV in particular, data, content or events are broadcast to a plurality of user units. Usually, said data contains pieces of information that enables a receiving user unit to form an electronic program guide (EPG). Said EPG helps the user to know what event is currently broadcast on different channels, and/or what events will be broadcast later on said channels. It may also indicate, for example by using several colors, which events are available to the user and which are not available yet, but could be available if specially bought.

For each event, EPG data also generally contains additional information such as at least the date and time of the broadcast, the channel, the title of the event, a category (sport, movie, new,...), as well as different more specific information depending on the category. For example, if broadcast event is in the category sport, specific information could contain the type of sport (football, baseball,...), the name of the teams who plays, the place were the match takes place, etc. In any case, the quantity of available data is limited as it must not use too much bandwidth.

If a user is interested by a specific topic such as the matches of a specific sport team or a particular subject, it is possible that the EPG data contains information enabling the user to know that he/she may be interested by the content. However, in many cases, such information may not be contained in the EPG data. This is the case in particular when the user is interested in specific features which may not be contained in the title or short description of an event or more generally in metadata linked to the event.

In any case, the user has to read and analyze a great amount of data to check if an interesting event is available. In a lot of cases, a user may miss an event of interest as the data is not sufficiently detailed to draw the attention of the user.

To summarize the drawbacks of the prior art, either the data linked to each event is very incomplete, in which case it is difficult for a user to determine if the event is of interest for him/her, or the data is more complete and the user will have great difficulties to find relevant data among the displayed information.

### DISCLOSURE OF INVENTION

The present invention proposes a method enabling a user to be informed when events which could be of interest for him/her are broadcast, without having to search among a great quantity of information. Moreover, the interesting events can concern any subject or data which are not necessarily contained in a short summary or metadata linked to said event.

The object of the present invention is obtained by a method for notifying a user about a broadcast event, this method comprising the steps of :
- entering into a management center (MC) at least one user keyword (KW);
- communicating identification means (UA) of at least one user unit to the management center said at least one user unit being linked to the user;
- in the management center, determining a set of broadcast data linked to broadcast events;
- forming a query (Q) containing at least a subset of the set of broadcast data and at least one user keyword;
- sending said query to a plurality of data sources (DS);
- in said plurality of data sources, searching at least one response (R) to the query based on a link between the user keyword and the subset of broadcast data;
- sending said response (R) to the management center;
- transmitting a notification (N) containing said response, to at least one of said at least one user unit using the identification means (UA) ;
- receiving the notification (N) by said at least one user unit;
- notifying the user of the match between the user keyword (KW) and a present or future broadcast event.

According to the present invention, the user can define one or several topics in which he/she is interested. These topics can be defined by keywords that can be chosen by the user in the user's own words. Thus, the keyword is independent from the language for example and is not limited to words of a given list. This enables the user to define in a very specific way, what he/she considers as interesting subjects. Depending on the personal keyword list of an individual, a notification will be sent to the user to inform him/her that an event of interest will be broadcast. The notification can contain different kinds of information and can have different forms. One kind of information concerns the rights to access to the broadcast event. In case the event is broadcast on a channel to which the user has subscribed, the system could display the channel, the date, the time and the title of the event. It could also display the keyword which corresponds to this event.

In case the event is broadcast on a channel to which the user did not subscribe, the system could display the conditions to be fulfilled to access to this event. In particular, the cost for buying a right to access to the event can be displayed. Other pieces of information could be displayed. For example, can the event be recorded on a memory of the user unit, can the event be displayed several times for the same price, until what date can the event be accessed,...

### BRIEF DESCRIPTION OF DRAWINGS

The present invention and its advantages will be better understood with reference to the enclosed drawing and to the detailed description of a particular embodiment, wherein :

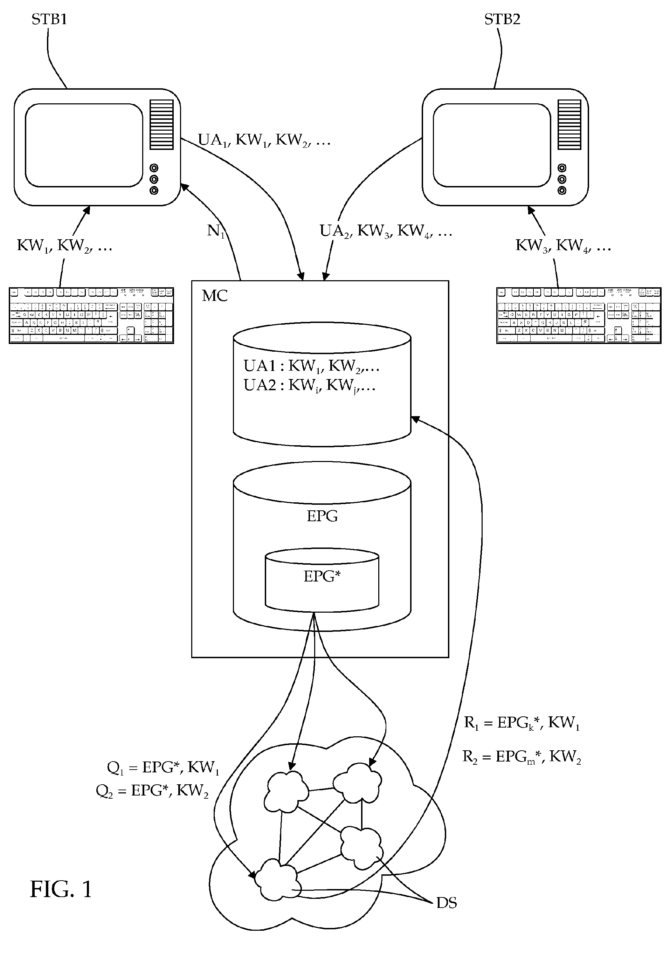

- Fig. 1 schematically shows the hardware used to implement the method of the present invention.

### BEST MODE FOR CARRYING OUT THE INVENTION

For implementing the method of the present invention, a user has at least one user unit STB which is able to receive broadcast events. Said events are broadcast by an event provider which is linked to a management center MC. Although the provider and the management center could be two distinct entities, they will be described below as a single entity and referred to as the management center MC. This management center is linked to a plurality of user units of which, only two are illustrated on Fig. 1 and referred to as STB1 and STB2.

Each user unit comprises identification means which can be a unique address UA stored in the user unit or which could be determined for example by an address of a connection between the user unit STB and the management center MC. The user unit may also comprise a security module (not represented) which is in charge of the security operations related to the access to a content or an event. These identification means could be stored in said security module.

The user unit further comprises communication means. In a first embodiment, the communication means are unidirectional. In this case, data can be transmitted from the management center to the user unit, but no data can be transmitted from the user unit to the management center. In a second embodiment, the user unit comprises bidirectional communication means. In this embodiment, on the one hand, the communication means are able to transmit data from the management center MC to the user unit; in particular they are able to transmit broadcast content, as mentioned above and responses to queries, as detailed below. On the other hand, these communication means are able to send data from the user unit to the management center. This point will be further described below.

Although referred to as the communication means, different communication channels can be used. For example, events can be transmitted to user units by broadcast and data can be sent from the user units to the management center or vice versa by a point-to-point connection, such as a telephone line. Response messages can be sent from the management center to the user units by broadcast, multicast, unicast, phone lines or any other suitable way.

The user unit further comprises means for defining keywords KW, referred to as introduction means. These means are illustrated in the form of a keyboard on Fig. 1. In this case, keywords can be defined by writing them with said keyboard. These introduction means could be a remote control wherein the keys are associated to letters. A device comprising scroll arrows could also be used, for example for choosing letters or words displayed on a screen of the user unit. A touch screen could also be used, as well as any other device which enables writing a word or choosing words or letters.

The user unit STB comprises a screen for displaying data or broadcast content for example. The screen could be a TV screen, a computer screen or any other suitable device such as for example a personal digital assistant (PDA) or a mobile phone.

The user unit further comprises means for processing data, referred to as processing means. Said data are received on the one hand from the introductions means and on the other hand from the management center. Data from the introduction means are in particular keywords defined by the user. Data from the management center are described in greater details below.

The management center contains data or events to be broadcast, as well as broadcasting means. It further contains at least one database containing data related to the events to be broadcast. Said data is used in particular to form an electronic program guide EPG. As it is well known, a typical EPG contains, for each event, a title, the channel on which it is broadcast, the schedule, possibly a category (news, comedy, sport, ...), a short summary, a recommended age,... generally referred to as metadata.

Depending on the genre and on the EPG provider, other data can be added. For example for a baseball match, the name of the teams and the place where the match takes place can be added to the EPG data. For a movie, the name of the main actors and of the producer could be provided. In any case, said data is limited, as too much pieces of information would lead to using too much bandwidth and making the data relevant for a user impossible to find among all irrelevant pieces of information.

The management center also comprises means for selecting at least one subset of broadcast data, called herein a subset of EPG data and referred to as EPG* in the figure. This subset could contain the title of an event, the genre, the name of the teams or actors. This subset of broadcast data does preferably not contain the schedule, the channel or the recommended age. The limit between what should be contained in the subset and what should not be contained is not fixed, but can be chosen according to the specific implementation of the method of the invention. In a particular embodiment, audio data of the broadcast data are processed to determine a match between the user keywords and an event.

The management center contains a database for storing the keywords. More specifically, this database comprises identification means UA of the user units STB together with keywords corresponding to the identification means. Generally, all the keywords for one identification means correspond to one record in the database. However, it is possible to have one record per keyword or a mix of both, i.e. for example one record containing a part of all the keywords defined by the user. Thus, a user may be associated to several records, each of them containing one or several keywords.

The method of the invention further uses data sources DS. These sources are generally "external" sources, i.e. they are usually not completed or updated by the management center, although it could be. Typically, these sources are Internet sources. A feature of these sources is that they are dynamic, i.e. they are regularly updated so that the content closely depends on the date.

The management center comprises means to communicate with these external data sources. These communication means enable the management center to send a query Q to one or several data sources and to receive a reply R from said source(s).

The introduction means described above in connection with the user unit can also communicate directly with the external data sources without flowing through the user unit. In this case, the user keywords are sent to the management center through the communication means between the data sources and the management center.

An example of such a system could be as follows. The user unit is a TV set with or without a return line. The introduction means comprises a keyboard and a computer independent from the TV set. The data sources are Internet sites. In this case, when a user keyword is introduced by a user with the keyboard, the computer transmits this keyword to the management center through the Internet.

According to the invention, the method comprises an initialization phase and a phase of use.

A first step of the initialization phase comprises defining at least one user keyword. In this step, the user uses the introduction means to define one or several keyword(s) corresponding to a subject said user is interested in. According to a first example, the user could be interested by Jan Garbarek. Thus, these words (Jan Garbarek) are introduced by the user. According to a second example, the user is interested by the baseball team "Baltimore orioles". Baltimore orioles would then be introduced by the user in the user unit.

It should be noted that these words can either be freely chosen by the user or could be selected among a list. Depending on the implementation, only one of these possibility could be available or both.

The introduced keywords could be displayed on the screen upon request, together with a menu for example. This menu proposes the user to delete, to add or to modify one or several keywords of the list of keywords.

The method can be used on a single user unit by several users. In this case, the keywords could be displayed either for all the users or only for one or several users among all the users. Displaying the list can require introducing a PIN code or a password. When the keywords for several users are displayed, each keyword could be displayed with the name or a pseudonym of the user.

On the contrary, several user units can be used by one user. In this case, the user unit must identify the user units on which the notification must be sent. Thus, a single set of user keywords can be defined by a user which receives the corresponding data on several user units such as for example a television set, a mobile phone and a portable digital assistant (PDA).

It should be noted that a mix of both possibility can also be used. For example a television set can be used by several users; one of these users further receives the notification on his/her mobile phone.

Once introduced by the user through the introduction means, the keywords are transmitted to the processing means, possibly after acknowledgement by the user. The processing means send the keywords to the management center through the communication means.

According to another embodiment, the keywords are introduced in the management center by the Internet. In this case, the user unit is not used for transferring the user keywords.

According to a specific embodiment, a dedicated Internet site can be accessed by a user computer, a user unit or a TV set with an Internet connection. This site can require user's identification means such as for example a unique address pertaining to that user. The unique address can be a number printed on a smart card of the user unit, a number received by mail or by electronic means, a phone number,... The site can also automatically determine a user's unique address.

The user then chooses or introduces his/her own keyword list. This keyword list is then transmitted to the management center with the relevant data concerning the user. Such relevant data can contain the user profile in case the Internet site gives the opportunity or forces the user to introduce personal data.

When received by the management center, the keywords are linked to the user unit who sent these keywords or to other user units chosen by the user. This link can be established in several ways. According to a first way, the unique address UA of the user unit is sent together with the keywords. According to a second way, the identification means are automatically detected by the management center by detecting the physical address of the unit or a communication port for example. Depending on the type of user unit, other ways could also be used. If the user unit has the functions of a mobile phone, the phone number could be used as identification means.

The user keywords and the identification means are stored in the management center in a so called keyword database. This ends the initialization phase. As mentioned previously, one user can be linked to several unique addresses UA of several user units.

A first step of the phase of use is realized in the management center. In this step, a query Q is prepared, said query containing at least one keyword and a subset of broadcast data or EPG data. According to the examples above, one query would contain "Jan Garbarek" and said subset of EPG data and another query would contain "Baltimore orioles" and the subset of EPG data. Generally, both subsets are identical. However, different subsets could also be used, depending on the specific implementation of the method of the invention. In a first embodiment, each query usually contains one user keyword KW or "group of related keywords. In this context, "Baltimore orioles" is considered as one keyword or group of related keywords. This is useful to eliminate hits that concern only "Baltimore" and not "Baltimore orioles". In this embodiment, the keyword "Jan Garbarek" and "Baltimore orioles" are not introduced in the same query as they are independent subjects or keywords.

In a second embodiment, more than one user keyword, or even all the user keywords of one user are introduced in the same query.

Each query can optionally comprise a logical function which defines the link between the different parts of the query. Such a logical function can define the fact that a response to the query must comprise "Jan Garbarek" and must comprise at least one word among all the words forming the subset of the EPG data.

If several user keywords are contained in the same query, the logical function can define the fact that at least one user keyword must be present.

When one or several queries are ready, they are sent to the external data sources DS through the means to communicate with the data sources. The query Q has the effect of searching in the external data sources, a data mentioning on the one hand, the user keyword and on the other hand, at least one of the elements of the subset of EPG data.

As an example, the query containing "Jan Garbarek" can correspond, on an external data source, to a web page describing a movie whose title is contained in said query and whose soundtrack is composed and played by Jan Garbarek. The query containing "Baltimore orioles" can correspond to a web page describing a documentary or news about the Baltimore orioles' player Jake Arrieta.

It should be noted that, as the query contains a subset of EPG data, only the web pages containing corresponding words will be found and not all the pages containing the user keywords.

Moreover, according to a particular embodiment, it is possible to limit the external data sources. This limitation can be done with a white list or a black list for example. The limitation could also be done by learning. Learning is done for example by recording actions done by the user when a response to a query is sent to the user unit. It is also possible to modify the result of the query by modifying the content of the subset of EPG data. For example, if the subset contains only the title of the broadcast events, the result will be different from the case where the subset comprises the title and all the words of the short summary for each event.

Essentially two ways for processing the queries are available. According to a first way, a date or preferably a range of dates is introduced in the query, said date or range being generally in the near future. For example, if the current date is July 1^{st}, the range of dates could go from July 1^{st} to July 15^{th}. A useful response to the query would then comprise a date corresponding to said range of dates. In case the query contains only one date instead of a range, it could further comprise a duration or time interval.

According to the second way, all the responses to queries are sent back to the management center, regardless of the date.

When a response R to a specific query is found in an external data source, it is sent to the management center. If the query contains the date, the responses correspond to the relevant dates. If the query does not contain the date, the responses must be sorted or filtered to eliminate hits that are irrelevant because they were broadcast in the past for example. Data concerning events that were broadcast in the past can also be displayed. This can be useful in systems where events are stored locally in the user unit or are available by catch-up or replay services. This can also be useful for events that may be accessed by other sources, for example Internet.

A response (R) to a query contains a hit which contains the keyword introduced by the user, at least one of the words of the EPG data and a date. The date is generally in the near future, but it may also be in the near past or the present date. Thank to the EPG data, the response R to the query can be used to find the specific event(s) that are linked to the keywords.

With the user keyword "Jan Garbarek" and the title "The Insider" in the subset of broadcast or EPG data, the corresponding query will find web pages showing that the soundtrack of the movie "The Insider" is composed by "Jan Garbarek". One or several of these web pages will generate a response to the management centre.

Depending on the implementation, the response can contain one page or several or all the pages that correspond to the query.

With the date in the query, the response will concern web pages which correspond to the date of said query. This usually eliminates static web sites as well as sites which are not linked to events broadcast around the current date.

With the keywords "Baltimore Orioles", the query would lead for example to web pages containing news concerning the Baltimore Orioles player "Jack Arietta".

The query could be sent by the management center to the external data sources at regular intervals, for example once a day or every hour. This interval could depend on the specific implementation of the system or on the type of subscription of each user for example.

According to a variant, in particular in case the external data sources are managed by a white list, a data source could send information every time an update is available on said data source. In that case, a query could be sent to the data source(s) when new information is available.

The response can also contain a ranking corresponding to the potential interest of the user. This ranking can take into account the number of occurrences of the user keyword or the words of the subset of EPG data, the date until when the event is broadcast, as well as any other data generally used to provide a ranking when doing searches on the Internet. The ranking can be based on the number of Internet pages or sites containing the relevant data. According to a variant, a response could be sent to the management center only if the ranking exceeds a given value, or if the number of Internet sites or pages is greater then a threshold. This avoids sending responses which are present only on one site for example and which are not confirmed by other data sources. The values or threshold should be adjustable by the user or the management center. In case the user is interested by very specific topics, a high threshold would block all the potential responses. Similarly, if a user is interested by a very popular topic, a too low threshold would return an important number of responses. The threshold could be automatically updated to correspond to a reasonable number of responses.

In the same way, it is also possible to limit the number of data sources that receive the queries, in order to generate a reasonable number of responses. The next step of the method of the invention comprises linking the response R to one or several user unit(s). This is done by the management center thank to the link between the user's unit identification means UA and the keyword KW, said keyword being contained in the query and in the response to said query.

When this link is established, a notification N is prepared by the management center and sent to the concerned user unit(s). This notification contains broadly speaking, means to inform the user that an event of interest for him/her will be broadcast. This notification can take different forms and produce different effects on the user unit(s). For example the relevant event could be displayed with a particular color on the EPG. A pop up or a widget could be displayed on the screen. Any other means for informing the user that one or several keywords generated a hit can be used.

In case of a widget or a pop-up for example, the displayed element can be used by the user for a specific action, for example immediately displaying the concerned event, programming the recording of said event, buying the rights to access to that event, or closing the pop-up without accessing to the event.

The specific action done by the user can be monitored and transmitted to the management center. This can help the management center to detect the most useful data sources. Another way for detecting the best data sources is to request the user to qualify the relevancy of the results, for example by choosing between "very relevant", "relevant" or "irrelevant" when he/she receives a response to the query. Thus, the management center can learn for each individual user, which are the most useful data sources.

In case the user unit is not available for receiving the notification, it can be stored in the management center. When the user unit is switched on, it can send a request to the management center to ask for the stored notification. According to another embodiment which can be useful in particular when the user unit do not have communication means enabling to send a request towards the management center, said management center sends the notification at regular intervals, for example every 10 minutes.

According to another embodiment, the notifications are broadcast to the users. In that case, if a user unit is not switched on, the broadcast notification is lost. However, regular broadcasting of the notification can minimize this drawback.

The present invention has two advantages. According to the first one, the user will be notified that, among all the available data forming an EPG, which can sometimes be huge, some events are of particular interest for this user. Thus, it is not necessary to search among a lot of pages to find interesting events.

According to the second advantage, the user can introduce keywords that are not comprised in the EPG data. A documentary about Jan Garbarek will probably contain these words in the EPG data. On the contrary, if the music of a movie is played or written by this musician, his name will probably not be contained in the EPG data.

Similarly, the EPG data concerning a match played by the Baltimore Orioles will contain the keyword "Baltimore Orioles". However, the EPG data for general news, wherein one new concern the Baltimore Oriole player Jake Arrieta may not contain the keywords "Baltimore Orioles".

Thus, according to the invention, it is possible to introduce very specific keywords and to receive "tailor-made" notifications, instead of using only the words contained in the EPG data or the metadata.

## Claims

1. Method for notifying a user about a broadcast event, this method comprising the steps of :
- entering into a management center (MC) at least one user keyword (KW);
- communicating identification means (UA) of at least one user unit to the management center said at least one user unit being linked to the user;
- in the management center, determining a set of broadcast data linked to broadcast events;
- forming a query (Q) containing at least a subset of the set of broadcast data and at least one user keyword;
- sending said query to a plurality of data sources (DS);
- in said plurality of data sources, searching at least one response (R) to the query based on a link between the user keyword and the subset of broadcast data;
- sending said response (R) to the management center;
- transmitting a notification (N) containing said response, to at least one of said at least one user unit using the identification means (UA);
- receiving the notification (N) by said at least one user unit;
- notifying the user of the match between the user keyword (KW) and a present or future broadcast event.

2. A method according to claim 1, wherein the response (R) is filtered such that said notification (N) contains links to events which are broadcast in the present or future.

3. A method according to claim 1, wherein the query (Q) contains at least the current date.

4. A method according to claim 1 or 3, wherein the query (Q) contains a time interval.

5. A method according to claim 1, wherein the notification (N) is sent together with the broadcast channels with management data which concerns the channels available, independently of the channel selected.

6. A method according to claim 1, wherein the broadcast data contains electronic program guide data.

7. A method according to claim 1, wherein the subset of broadcast data contains metadata describing the broadcast events' content,

8. A method according to claim 1, wherein the subset of broadcast data contain subtitles.

9. A method according to claim 1, wherein the subset of broadcast data contain at least one audio channel, the management center processing the audio channel to determine a match between the user keyword and an event of interest.

10. A method according to claim 1, wherein said notification is stored in the management center prior to being sent to said at least one user unit.

11. A method according to claim 1 or 10, wherein the notification (N) is sent to a user unit upon request from said user unit.

12. A method according to claim 11, wherein the request from the user unit to the management center is sent when the user unit is switched on.
